# FASCICULE DE BREVET EUROPEEN

(11) **EP 2 709 823 B1**
(45) Date de publication et mention de la délivrance du brevet: **30.03.2016**
(21) Numéro de dépôt: 12716042.2
(22) Date de dépôt: 24.04.2012
(51) Int. Cl.: B29C 59/16, B29C 59/14, B60S 1/04, B01J 3/00, B29C 71/04, B29L 31/30, B60S 1/38

(54) **DISPOSITIF ET PROCEDE D'ETANCHEITE POUR LE TRAITEMENT SOUS VIDE D'UNE SURFACE D'UN OBJET**
ABDICHTUNGSVORRICHTUNG UND VERFAHREN ZUR VAKUUMBEHANDLUNG EINER OBERFLÄCHE EINES OBJEKTES
SEALING DEVICE AND PROCESS FOR VACUUM TREATMENT OF AN OBJECT SURFACE

(30) Priorité: 16.05.2011 FR 1154237
(43) Date de publication de la demande: 26.03.2014
(73) Titulaire: Valeo Systèmes d'Essuyage, 78321 Le Mesnil Saint Denis (FR)
(72) Inventeur: BRAUN, Alexis, 63114 Coudes (FR); BRETAGNOL, Frédéric, 63500 Issoire (FR); DOUPEUX, Severin, 63500 Issoire (FR)
(74) Mandataire: Léveillé, Christophe
(86) Numéro de dépôt international: PCT/EP2012/057440
(87) Numéro de publication internationale: WO 2012/156178

(56) Documents cités:
- DE-A1- 3 300 097
- DE-A1- 19 620 354
- DE-A1-102008 040 271
- US-A- 4 507 539
- US-A- 4 551 310
- US-A- 5 807 516

## Description

La présente invention concerne le domaine du traitement d'un objet profilé, plus particulièrement du traitement d'une surface d'un objet profilé en matériau à base d'élastomère telle que la surface d'une lame d'essuyage.

De manière générale, comme décrit par exemple dans le document DE102008040271 A1, les lames d'essuyage sont obtenues par extrusion d'un profilé qui, après refroidissement, est découpé en tronçons de longueur désirée. Ces tronçons, appelés jumelles de lames d'essuyage, comprennent deux lames d'essuyage pouvant être reliées entre elles par un élément central sacrificiel.

On peut, ensuite, appliquer à chaque jumelle un traitement de surface désiré. Or, certains traitements de surface se font sous vide et nécessitent de devoir placer la jumelle dans une chambre de traitement amenée, avant de réaliser le traitement, à un niveau de vide relativement poussé, par exemple de l'ordre de 10⁻² mbar à 10⁻⁶ mbar.

Le traitement d'un grand nombre de jumelles implique de réaliser de nombreuses opérations de chargement/déchargement de la chambre. Or, chaque opération de chargement/déchargement entraîne la mise à l'atmosphère de la chambre. Il faut donc recréer les conditions de vide appropriées dans la chambre après chaque mise en communication de cette chambre avec l'atmosphère.

On souhaite donc maintenir la chambre de traitement dans les conditions de vide appropriées et traiter le profilé, avant découpe, en continu en le faisant défiler dans la chambre de traitement.

Pour cela, il faut gérer l'étanchéité entre la chambre de traitement et les moyens de convoyage disposés en amont et en aval de la chambre.

Des installations de traitement sous vide de matériaux plats ou en feuille sont connues. Les brevets US 4 551310 et US 4 507 539 s'intéressent respectivement à une installation de traitement de feuilles ou films plastiques et à un procédé de traitement continu d'un tissu. De façon similaire DE 33 00 097 divulgue une installation pour le traitement de matériaux plats ou en feuille. Ces installations sont agencées pour le traitement d'objets profilés plats et ne sont pas compatibles avec un objet profilé de section concave.

L'invention a notamment pour but de proposer des moyens de convoyage comprenant des moyens d'étanchéité simples et efficaces permettant de maintenir, dans la chambre de traitement, les conditions de vide appropriées. Ce but peut être atteint pour un dispositif comme défini dans la revendication 1.

A cet effet, l'invention a pour objet un dispositif d'étanchéité destiné à séparer deux espaces de pressions différentes à travers lesquels est convoyé un objet profilé de section concave, **caractérisé en ce qu'il** comprend une paire de rouleaux de convoyage de l'objet profilé d'axes sensiblement parallèles entre eux et orthogonaux à la direction de convoyage, les axes des rouleaux étant espacés entre eux de façon à permettre le convoyage de l'objet profilé entre eux et à provoquer la déformation élastique du profilé par compression entre les deux rouleaux, afin que les rouleaux et le profilé déformé participent à l'étanchéité entre les deux espaces.

On entend par « objet profilé », un objet dont une des dimensions est très importante par rapport aux autres. En général, un profilé est fabriqué par un procédé d'extrusion à travers une filière. Un tel profilé peut également être fabriqué par moulage.

On entend par « section concave », une section telle qu'il existe au moins un segment de droite non entièrement inclus dans la section, le segment ayant un point de départ et un point d'arrivée dans la section du profilé. En d'autre terme, cela signifie que le profilé présente sur sa section au moins une surface concave.

Dans le dispositif, les rouleaux de convoyage déforment entre eux élastiquement le profilé par compression lors de son passage entre les deux rouleaux.

Grâce à la déformation élastique du profilé de section concave entre les deux rouleaux de convoyage, on favorise le repli et l'écrasement de certaines parties du profilé sur lui-même ce qui permet de créer une étanchéité entre chaque rouleau et le profilé.

Cette déformation élastique n'est que temporaire et le profilé reprend sa forme initiale après son passage entre les deux rouleaux.

Le dispositif selon l'invention admet un certain taux de fuite entre les deux espaces qu'il sépare, c'est-à-dire que du gaz contenu dans l'espace ayant la pression la plus élevée peut passer, en faible quantité, vers l'espace ayant la pression la moins élevée. Ce taux de fuite est compensé, par exemple, par des moyens de pompage reliés à chaque espace.

Le dispositif peut en outre comporter l'une ou plusieurs des caractéristiques suivantes.
- Chaque rouleau est réalisé en un matériau dont la dureté Shore A est supérieure à 65 et dont le module de Young est supérieur à 3 MPa. Les propriétés mécaniques du matériau du rouleau permettent le convoyage et l'écrasement du profilé.
- Chaque rouleau comporte un revêtement périphérique déformable élastiquement destiné à être en contact avec le profilé de manière à se déformer conjointement avec le profilé. Ce revêtement périphérique, se déformant conjointement avec le profilé, permet d'augmenter l'étanchéité entre le profilé et le rouleau. En effet, sous l'effet de compression des deux rouleaux, il peut subsister entre le profilé déformé et les rouleaux, des interstices par lesquels du gaz peut passer d'un espace à un autre. Grâce à ce revêtement périphérique qui se déforme conjointement avec le profilé, ces interstices peuvent être comblés. L'étanchéité entre chaque rouleau et le profilé est donc améliorée.

- Le revêtement est réalisé en un matériau dont la dureté Shore A est inférieure à 40 et dont le module d'Young est inférieur à 1 MPa. Ainsi, le revêtement se déforme élastiquement et conjointement avec le profilé.
- Le revêtement a une épaisseur évolutive parallèlement à l'axe du rouleau de façon à permettre le contact entre eux des revêtements des rouleaux, de part et d'autre du profilé axialement. Ainsi, on garantit une meilleure étanchéité entre les rouleaux de part et d'autre du profilé. En effet, généralement la dimension axiale du rouleau est supérieure à la dimension de la section du profilé dans cette direction, si bien qu'il est intéressant que le revêtement périphérique puisse avoir une épaisseur plus importante de part et d'autre du profilé, c'est-à-dire dans les régions où le revêtement du premier rouleau est en contact avec le revêtement du deuxième rouleau et où le profilé n'est pas compressé entre les deux rouleaux.
- Le revêtement est composé d'un élastomère expansé dont la surface extérieure, c'est-à-dire la surface destinée à être en contact avec le profilé, est non poreuse. Le revêtement obtenu peut se déformer conjointement avec le profilé grâce à la structure alvéolée de l'élastomère expansé et assurer une étanchéité renforcée grâce à la surface non poreuse du revêtement qui ne permet pas le passage de gaz dans les alvéoles de l'élastomère expansé.
- Le dispositif comprend un support portant les rouleaux, formant une chambre de passage du profilé, la chambre de passage étant délimitée par des lèvres d'étanchéité, chaque lèvre étant montée sur le support en contact d'étanchéité avec un rouleau correspondant. Ainsi, la chambre de passage est également étanche et ne permet pas le passage de gaz hors de la chambre de passage.

L'invention a également pour objet une installation pour le traitement sous vide d'une surface d'un objet profilé de section concave, caractérisée en ce qu'elle comprend une chambre principale de traitement sous vide, dans laquelle l'objet est destiné à être traité, la chambre principale comportant une entrée et une sortie comprenant chacune un dispositif tel que définit précédemment.

Grâce à cette installation, on réduit donc le temps de traitement sous vide car il n'est plus nécessaire de réaliser de nombreuses opérations de chargement/déchargement de la chambre principale de traitement. En effet, cette dernière est maintenue dans les conditions de vide appropriées et on y fait défiler le profilé. Le traitement sous vide est donc réalisé en continu.

Si l'on désire augmenter le temps de traitement du profilé, l'installation peut comprendre plusieurs chambres principales de traitement ou une chambre principale dont la longueur est modulable. Il n'est donc pas nécessaire de ralentir la vitesse de convoyage du profilé à travers chaque chambre de traitement.

De plus, cette installation de traitement sous vide peut facilement être insérée dans la chaine de production existante du profilé.

L'installation peut en outre comporter l'une ou plusieurs des caractéristiques suivantes.
- L'installation comprend des chambres secondaires de transfert, chacune à une pression différente de celle de la chambre principale, chaque chambre secondaire comportant une entrée et une sortie comprenant chacune un dispositif tel que définit précédemment. Ainsi, le profilé passe par une succession de chambres, chacune à une pression différente, ce qui permet, par exemple, d'augmenter le vide par paliers lorsque le profilé passe de la pression atmosphérique aux conditions de vide appropriées dans la chambre principale. Ces chambres intermédiaires permettent notamment le dégazage du profilé. On constate également que selon les conditions de vide que l'on désire atteindre, on peut moduler cette installation en augmentant ou en diminuant le nombre de chambres secondaires en amont et/ou en aval de la chambre principale de traitement.
- La chambre principale comprend des moyens de traitement de la surface de l'objet par bombardement ionique.
- Les moyens de traitement de la surface sont agencés dans une chambre à vide poussé logée dans la chambre principale. Ainsi, le vide poussé ne doit être maintenu que dans un espace restreint qui peut notamment être relié à des moyens de pompage secondaires. Cette chambre à vide poussé peut, par exemple, être de forme cylindrique.
- L'installation comprend des moyens de bombardement ionique destinés à bombarder deux surfaces opposées du profilé. On peut ainsi traiter deux surfaces opposées du profilé simultanément.

L'invention couvre également :
- Une installation selon l'une quelconque des définitions ci-dessus, dans laquelle chaque chambre est reliée à des moyens de pompage qui permettent de maintenir lesdites chambres dans les conditions de vide appropriées.
- Une installation selon l'une quelconque des définitions ci-dessus, dans laquelle l'objet profilé est en matériau à base d'élastomère, notamment destiné à former des jumelles de lames d'essuyage.

L'invention couvre également un procédé comprenant les étapes consistant à :
- traiter par bombardement ionique un objet profilé dans une installation selon l'une quelconque des définitions ci-dessus,
- découper l'objet profilé en tronçons de longueur adéquate pour former des jumelles de lames d'essuyage,
- séparer les lames d'essuyage d'une partie centrale sacrificielle constitutive de chaque jumelle de lames d'essuyage.

Le traitement par bombardement ionique s'effectue par exemple à l'aide d'un dispositif comportant un générateur d'ions et un applicateur d'ions tels que par exemple ceux décrits dans FR-A-2 899 242 ou US20060042745.

L'applicateur d'ions comprend habituellement des moyens choisis par exemple parmi des lentilles électrostatiques de mise en forme de faisceau d'ions, un diaphragme, un obturateur un collimateur un analyseur de faisceau d'ions et un contrôleur de faisceau d'ions.

Le générateur d'ions comprend habituellement des moyens choisis par exemple parmi une chambre d'ionisation, une source d'ions à filament ou à résonance cyclotronique électronique ou un système à plasma impulsionnel, un accélérateur d'ions et dans certains cas, un séparateur d'ions.

Avantageusement, le bombardement ionique est effectué au moyen de faisceaux d'ions mono ou multi-énergie(s) issus de gaz tels que l'hélium, le néon, le krypton, l'argon, le xénon, le dioxygène ou le diazote, seuls ou en mélange. De préférence, le diazote et/ou l'hélium, seuls ou en mélange, préférentiellement le diazote.

En outre, le bombardement ionique peut être réalisé par des micro-sources qui peuvent être basées, par exemple, sur une technologie filamentaire ou sur une technologie type ECR (Electron Cylonic Resonance) avec des ions multi-énergie d'azote. De par leur très faible taille, ces micro-sources permettent de concevoir un dispositif dont l'encombrement est peu important.

L'invention sera mieux comprise à la lecture de la description qui va suivre, donnée uniquement à titre d'exemple et faite en se référant aux dessins dans lesquels :
- la figure 1 est une vue schématique en coupe longitudinale d'une installation selon l'invention ;
- la figure 2 est une vue en coupe transversale d'un profilé d'une jumelle de lames d'essuyage ;
- la figure 3 est une vue schématique selon le plan de coupe III-III de la figure 1 ;

- la figure 4 est une vue schématique selon le plan de coupe IV-IV de la figure 1 ;
- la figure 5 est une vue schématique selon le plan de coupe V-V de la figure 1 ;
- la figure 6 est une vue schématique selon le plan de coupe VI-VI de la figure 5.

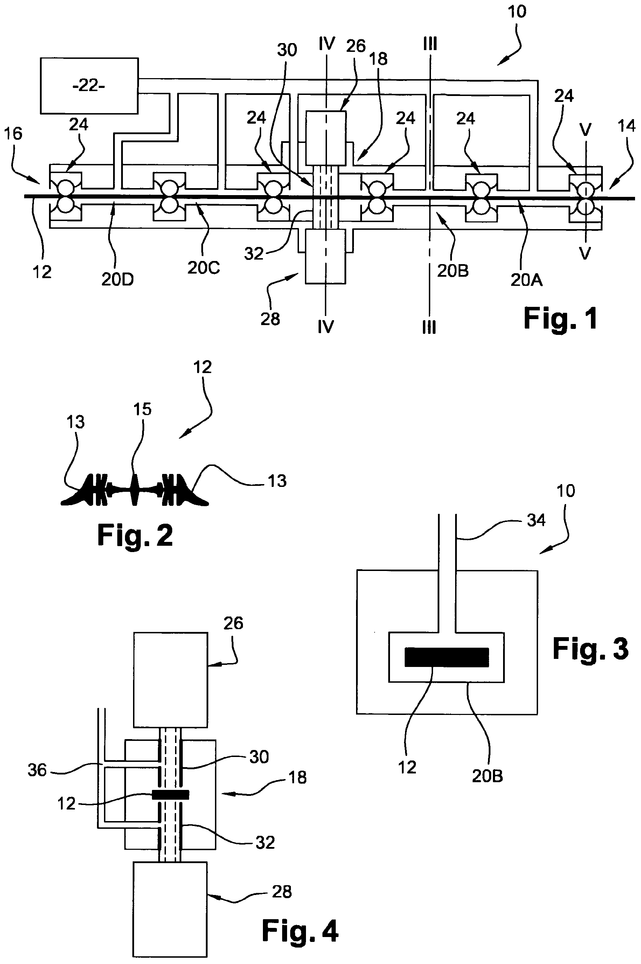

On a représenté sur la figure 1 une installation 10 de traitement sous vide en continu d'un profilé 12 destiné à former des jumelles de lames d'essuyage.

Comme on peut le voir sur la figure 2, la section de ce profilé 12 présente une forme complexe concave dont des parties peuvent être déformées par repli et/ou écrasement sur le profilé 12 lui-même.

Cette installation 10 comprend une entrée 14 et une sortie 16, entre lesquelles le profilé 12 est convoyé dans l'installation 10. Après sortie de l'installation 10, le profilé 12 est découpé en tronçons de longueur adéquate pour former des jumelles de lames d'essuyage. Les lames 13 sont ensuite séparées de la partie centrale sacrificielle 15.

L'installation 10 comprend également une chambre principale de traitement 18 et quatre chambres secondaires de transfert 20A - 20D, deux en amont et deux en aval de la chambre principale 18.

Chaque chambre 18, 20A - 20D est reliée à des moyens de pompage 22 qui permettent de maintenir les chambres dans les conditions de vide appropriées. Ces moyens de pompage sont des moyens connus permettant d'atteindre des vides pouvant aller jusqu'à 10⁻⁶ mbar. Il peut y avoir plusieurs moyens de pompage reliés à une ou plusieurs chambres 18, 20A - 20D.

A l'entrée et à la sortie de chaque chambre 18, 20A-20D, l'installation 10 comprend un dispositif d'étanchéité 24. Ainsi, entre deux chambres successives, un unique dispositif 24 est présent. En effet, la sortie de la première chambre est confondue avec l'entrée de la deuxième chambre.

Chaque dispositif 24 permet de séparer deux chambres de pressions différentes.

En effet, après être sorti de l'extrudeuse, le profilé 12 subit un traitement thermique et est refroidi. Il entre ensuite dans l'installation 10, et passe, par paliers, de la pression atmosphérique aux conditions de vide appropriées dans la chambre principale de traitement 18, puis retourne, par paliers, à la pression atmosphérique après traitement dans la chambre 18.

Ainsi, la pression dans la chambre 20A est d'environ 10⁻¹ mbar, ce qui permet de créer un premier niveau de vide en pompant l'air contenu dans la chambre. Dans la chambre 20B, la pression est d'environ 10⁻² mbar, ce qui permet de nettoyer la chambre des impuretés qu'elle contient et de commencer le processus de dégazage du profilé 12. Dans la chambre principale 18, la pression est d'environ 10⁻³ mbar. Dans cette plage de pression, le processus de dégazage du profilé 12 peut être terminé et on garantit que la chambre est propre et ne contient pas d'impuretés. Dans les chambres à vide poussé 30 et 32, la pression est d'environ 10⁻⁴ mbar ce qui permet de réaliser le traitement de surface par bombardement ionique.

Le profilé 12, après traitement, quitte la chambre 18 pour traverser la chambre 20C dont la pression est d'environ 10⁻² mbar et la chambre 20D dont la pression est à environ 10⁻¹ mbar et sort de l'installation 10 pour se retrouver à pression atmosphérique.

L'installation comprend également des moyens (non représentés) permettant de faire défiler le profilé 12 dans l'installation 10, tels qu'une tireuse.

La figure 3 est une vue en coupe de la chambre secondaire 20B. Cette vue en coupe est similaire pour les autres chambres secondaires 20A, 20C et 20D. Sur cette figure, la section du profilé 12 est représentée de façon très schématique par un rectangle. Cette chambre 20B est reliée aux moyens de pompage 22 par l'intermédiaire d'un conduit 34.

On constate que les dimensions de la section de la chambre secondaire 20B sont telles que l'on minimise le volume de pompage tout en évitant des frottements entre le profilé 12 et les parois de la chambre secondaire 20B. On limite ainsi les besoins en capacité de pompage de l'installation 10.

Par exemple, si la section du profilé mesure 35 mm en largeur et 8 mm d'épaisseur, la chambre 20B aura une section rectangulaire de 45 mm sur 18 mm. La longueur de la chambre dans la direction de convoyage est déterminée en fonction de la vitesse d'extrusion en amont de l'installation 10 et des temps de dégazage du profilé 12.

La figure 4 représente une vue en coupe de la chambre principale 18 qui comprend des moyens de traitement 26, 28 d'une surface du profilé par bombardement ionique disposés de part et d'autre du profilé 12 de sorte que l'installation 10 permet de traiter simultanément deux surfaces opposées du profilé 12.

Ces moyens 26, 28 sont chacun agencés dans une chambre à vide poussé 30, 32 logée dans la chambre principale 18. Chaque chambre à vide poussé 30, 32 est reliée aux moyens de pompage 22 par des conduits 36.

Lorsque le profilé 12 traverse la chambre 18, il passe entre les chambres à vide poussé 30 et 32 et est exposé au bombardement ionique émit par les moyens 26, 28.

On comprend donc qu'il peut être avantageux que l'installation 10 comprenne plusieurs chambres principales 18 ou une chambre principale 18 plus longue pouvant recevoir plusieurs moyens de traitement 26, 28 disposés les uns à la suite des autres dans cette chambre principale 18. En outre, les moyens 26, 28 peuvent être agencés respectivement dans une chambres à vide poussé plus longue 30, 32, ou être agencés chacun dans une pluralité de chambres à vide poussé 30, 32 logées dans la chambre principale 18.

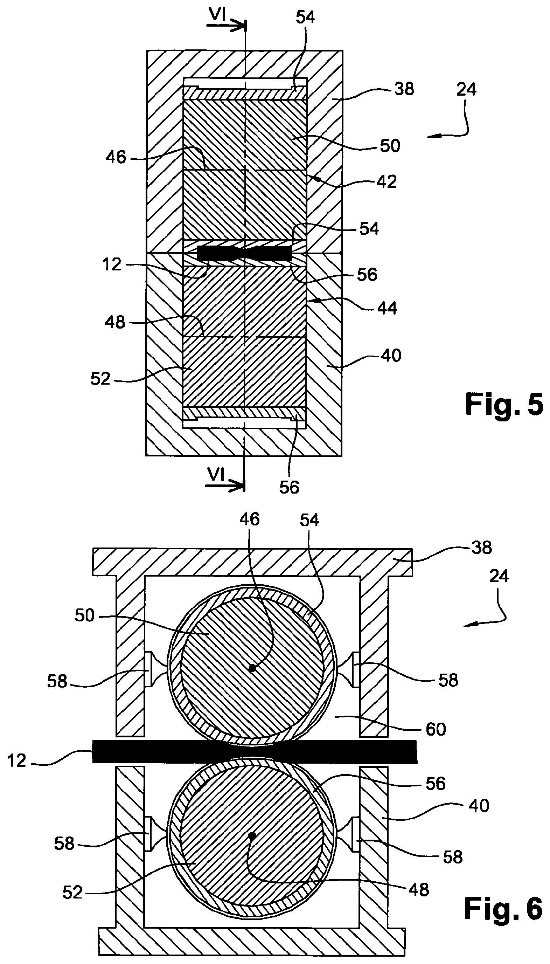

Enfin, on a représenté sur la figure 5 une vue en coupe d'un dispositif d'étanchéité 24 tel que ceux disposés à l'entrée et à la sortie de chaque chambre 18, 20. Ce dispositif 24 comprend un support, par exemple en deux parties 38, 40. Chaque partie de support 38, 40 porte un rouleau 42, 44 de forme cylindrique. Chaque rouleau 42, 44 peut tourner autour de son axe 46, 48 respectif. Les axes 46, 48 sont parallèles entre eux et orthogonaux à la direction de convoyage.

L'étanchéité entre chaque support 38, 40 et chaque rouleau 42, 44 est assurée par des moyens conventionnels connus.

Chaque rouleau 42, 44 comprend un rouleau intérieur 50, 52 réalisé en matériau thermoplastique ou en matériau élastique à haute viscosité ayant une dureté Shore A supérieure à 65 et un module d'Young supérieur à 3 MPa. De préférence, le matériau a une dureté Shore A comprise entre 70 et 90 et un module d'Young compris entre 3,5 et 5 MPa. Ce matériau est, par exemple, un éthylène-propylène-diène monomère (EPDM) haute viscosité spécialement formulé pour cette application.

Dans le cas présent, chaque rouleau 42, 44 comprend également un revêtement périphérique 54, 56 dont la dureté Shore A est inférieure à 40 et le module d'Young est inférieur à 1 MPa. De préférence, le matériau a une dureté Shore A comprise entre 20 et 30 et un module d'Young compris entre 0,4 et 0,8 MPa. Ce matériau est choisi, par exemple, parmi le groupe formé par les caoutchoucs nitriles (NBR), les polychloroprènes (CR), les éthylène-propylène-diène monomères (EPDM) à basse viscosité ou par un élastomère expansé. En outre, la surface extérieure du revêtement périphérique doit présenter une grande résistance à l'abrasion.

Les axes 46, 48 sont espacés entre eux de façon à permettre le convoyage du profilé 12 entre eux et à provoquer la déformation élastique du profilé 12 par compression entre les deux rouleaux 42, 44 grâce au matériau constitutif des rouleaux intérieurs 50, 52. Cette compression déforme élastiquement le profilé 12 lorsqu'il passe entre les deux rouleaux 42, 44 et favorise le repli et l'écrasement de certaines parties du profilé 12 sur lui-même ce qui permet de créer une étanchéité entre chaque rouleau 42, 44 et le profilé 12 déformé. De plus, le revêtement périphérique 54, 56 se déformant élastiquement et conjointement au contact du profilé 12, permet de garantir une meilleure étanchéité entre les rouleaux 42, 44 et le profilé 12.

On voit également que le revêtement périphérique 54, 56 n'a pas la même épaisseur parallèlement à l'axe 46, 48 du rouleau. En effet, les rouleaux 42, 44 ont une dimension, parallèlement à leur axe 46, 48, supérieure à la dimension du profilé 12 dans cette même direction. Il y a donc des régions où le revêtement périphérique 54 du rouleau supérieur 42 est en contact avec le revêtement périphérique 56 du rouleau inférieur 44, c'est-à-dire des régions où le profilé n'est pas compressé entre les deux rouleaux 42, 44. En prévoyant une épaisseur supérieure de revêtement 54, 56 dans ces régions, on garantit une meilleure étanchéité au dispositif.

Sur la figure 6, on voit que le dispositif 24 comprend également des lèvres d'étanchéité 58 montées sur les parties 38, 40 du support et en contact d'étanchéité avec les rouleaux 42, 44. Ces lèvres 58, les rouleaux 42, 44 et les deux parties 38, 40 du support définissent une chambre de passage 60 du profilé 12. Dans ce mode de réalisation, les lèvres 58 ont pour fonction d'éviter le passage de gaz, par exemple de la chambre secondaire 20B à la chambre principale 18 par contoumement des rouleaux 42, 44. Ces lèvres sont de préférence réalisées dans un matériau plus dur que celui du revêtement périphérique 54, 56, présentant une bonne résistance à l'abrasion, et qui permet de garantir le glissement du revêtement 54, 56 contre la lèvre 58 sans l'endommager, tout en garantissant un contact étanche entre eux.

Dès que le profilé 12 n'est plus compressé entre deux rouleaux 42, 44, il reprend sa forme initiale, comme on peut le voir sur la figure 6. Cette compression est ponctuelle et n'engendre pas de déformations irréversibles du profilé 12.

L'installation 10 permet donc de traiter par bombardement ionique deux surfaces opposées du profilé 12 en continu. Le profilé 12 entre dans l'installation 10 par l'entrée 14, passe dans un premier dispositif 24, entre dans la chambre 20A à pression différente de la pression atmosphérique, puis, passe dans un deuxième dispositif 24 et entre dans la chambre 20B qui est à une pression différente de la pression dans la chambre 20A avant de passer dans un troisième dispositif 24 et d'entrer dans la chambre principale 18 dans laquelle il va être traité. Après traitement, le profilé passe dans un quatrième dispositif 24 et entre dans la chambre 20C dont la pression est supérieure à la pression dans la chambre de traitement 18. Il passe ensuite dans un cinquième dispositif 24 et entre dans la chambre 20D avant de passer dans un sixième dispositif 24 et de sortir de l'installation 10 et se retrouver à pression atmosphérique.

On notera enfin que l'invention n'est pas limitée au mode de réalisation précédemment décrit. Par exemple, les lèvres 58 d'étanchéité peuvent présenter des formes diverses et ne sont pas limitées aux lèvres 58 de la figure 6.

On a représenté, dans ce mode de réalisation, une installation 10 comprenant une chambre principale de traitement 18 et quatre chambres secondaires de transit 20A - 20D. Selon le temps de traitement sous vide désiré, l'installation peut comprendre une pluralité de chambres principales 18 disposées l'une après l'autre, chaque chambre 18 étant séparée de la suivante par un dispositif d'étanchéité 24. En outre, selon les conditions de vide appropriées, on peut également moduler le nombre de chambres secondaires en en ajoutant ou en en supprimant. Il n'est pas non plus nécessaire que le nombre de chambres secondaires disposées en amont de la chambre principale 18 soit égal au nombre de chambres secondaires disposées en aval.

L'invention comprend également un procédé qui comprend les étapes consistant_à :
- traiter par bombardement ionique un objet profilé 12 dans une installation 10 selon l'invention,
- découper l'objet profilé 12 en tronçons de longueur adéquate pour former des jumelles de lames d'essuyage,
- séparer les lames d'essuyage 13 d'une partie centrale sacrificielle 15 constitutive de chaque jumelle de lames d'essuyage,
lequel permet de préparer et de traiter par bombardement ionique de nombreuses lames d'essuyage en un nombre réduit d'opérations.

## Revendications

1. Dispositif d'étanchéité (24) destiné à séparer deux espaces de pressions différentes à travers lesquels est convoyé un objet profilé (12), le dispositif comprenant une paire de rouleaux de convoyage (42 ; 44) de l'objet profilé (12) d'axes (46 ; 48) sensiblement parallèles entre eux et orthogonaux à la direction de convoyage, les axes (46 ; 48) des rouleaux étant espacés entre eux de façon à permettre le convoyage de l'objet profilé (12) entre eux et à provoquer la déformation élastique de l'objet profilé (12) par compression entre les deux rouleaux (42 ; 44), afin que les rouleaux (42 ; 44) et l'objet profilé (12) déformé participent à l'étanchéité entre les deux espaces,
**caractérisé en ce que** l'objet profilé (12) est de section concave et chaque rouleau (42 ; 44) comporte un revêtement périphérique (54 ; 56) déformable élastiquement destiné à être en contact avec le profilé (12) de manière à se déformer conjointement avec le profilé (12).

2. Dispositif (24) selon la revendication précédente, dans lequel chaque rouleau (42 ; 44) est réalisé en un matériau dont la dureté Shore A est supérieure à 65 et dont le module de Young est supérieur à 3 MPa.

3. Dispositif (24) selon la revendication 1 ou 2, dans lequel le revêtement (54 ; 56) est réalisé en un matériau dont la dureté Shore A est inférieure à 40 et dont le module d'Young est inférieur à 1 MPa.

4. Dispositif (24) selon l'une quelconque des revendications précédentes, dans lequel le revêtement (54 ; 56) a une épaisseur évolutive parallèlement à l'axe (46 ; 48) du rouleau de façon à permettre le contact entre eux des revêtements (54 ; 56) des rouleaux, de part et d'autre du profilé (12) axialement.

5. Disposition (24) selon l'une quelconque des revendications précédentes , dans lequel le revêtement (54 ; 56) est composé d'un élastomère expansé dont la surface extérieure, c'est-à-dire la surface destinée à être en contact avec le profilé (12), est non poreuse.

6. Dispositif (24) selon l'une quelconque des revendications précédentes, comprenant un support (38 ; 40) portant les rouleaux (42 ; 44), formant une chambre de passage (60) du profilé, la chambre de passage (60) étant délimitée par des lèvres d'étanchéité (58), chaque lèvre (58) étant montée sur le support (38 ; 40) en contact d'étanchéité avec un rouleau (42 ; 44) correspondant.

7. Installation (10) pour le traitement sous vide d'une surface d'un objet profilé (12) de section concave, **caractérisée en ce qu'**elle comprend une chambre principale de traitement (18) sous vide, dans laquelle l'objet profilé (12) est destiné à être traité, la chambre principale (18) comportant une entrée et une sortie comprenant chacune un dispositif (24) selon l'une quelconque des revendications 1 à 6.

8. Installation (10) selon la revendication précédente, comprenant des chambres secondaires de transfert (20A ; 20B ; 20C ; 20D), chacune à une pression différente de celle de la chambre principale (18), chaque chambre secondaire (20A ; 20B ; 20C ; 20D) comportant une entrée et une sortie comprenant chacune un dispositif (24) selon l'une quelconque des revendications 1 à 6.

9. Installation (10) selon la revendications 7 ou 8, dans laquelle la chambre principale (18) comprend des moyens de traitement (26 ; 28) de la surface de l'objet profilé (12) par bombardement ionique.

10. Installation (10) selon la revendication précédente, dans laquelle les moyens de traitement (26 ; 28) de la surface sont agencés dans une chambre à vide poussé (30 ; 32) logée dans la chambre principale (18).

11. Installation (10) selon la revendication 9 ou 10, comprenant des moyens de bombardement ionique (26 ; 28) destinés à bombarder deux surfaces opposées de l'objet profilé (12).

12. Installation (10) selon l'une quelconque des revendications 7 à 11, dans laquelle chaque chambre (18 ; 20A ; 20B ; 20C ; 20D) est reliée à des moyens de pompage (22) qui permettent de maintenir lesdites chambres dans les conditions de vide appropriées.

13. Installation (10) selon l'une quelconque des revendications 7 à 12, dans laquelle l'objet profilé (12) est en matériau à base d'élastomère, notamment destiné à former des jumelles de lames d'essuyage.

14. Procédé de préparation de lames d'essuyage (13) comprenant les étapes consistant à :
- traiter par bombardement ionique un objet profilé (12) dans une installation (10) selon l'une quelconque des revendications 7 à 13,
- découper l'objet profilé (12) en tronçons de longueur adéquate pour former des jumelles de lames d'essuyage,
- séparer les lames d'essuyage (13) d'une partie centrale sacrificielle (15) constitutive de chaque jumelle de lames d'essuyage.

## Patentansprüche

1. Abdichtungsvorrichtung (24), die dazu bestimmt ist, zwei Räume mit unterschiedlichem Druck, durch die hindurch ein Profilgegenstand (12) befördert wird, zu trennen, wobei die Vorrichtung ein Paar Förderwalzen (42; 44) für den Profilgegenstand (12) mit im Wesentlichen zueinander parallelen und zur Förderrichtung orthogonalen Achsen (46; 48) umfasst, wobei die Achsen (46; 48) der Walzen zueinander beabstandet sind, um die Beförderung des Profilgegenstandes (12) zwischen ihnen zu ermöglichen und die elastische Verformung des Profilgegenstandes (12) durch Kompression zwischen den beiden Walzen (42; 44) hervorzurufen, damit die Walzen (42; 44) und der verformte Profilgegenstand (12) an der Abdichtung der beiden Räume beteiligt sind,
**dadurch gekennzeichnet, dass** der Profilgegenstand (12) einen konkaven Querschnitt aufweist, und jede Walze (42; 44) eine elastisch verformbare Umfangsverkleidung (54; 56) aufweist, die dazu bestimmt ist, mit dem Profil (12) in Kontakt zu sein, um sich gemeinsam mit dem Profil (12) zu verformen.

2. Vorrichtung (24) nach dem vorhergehenden Anspruch, bei der jede Walze (42; 44) aus einem Material hergestellt ist, dessen Shore-A-Härte größer als 65 ist, und dessen Young-Modul größer als 3 MPa ist.

3. Vorrichtung (24) nach Anspruch 1 oder 2, bei der die Verkleidung (54; 56) aus einem Material hergestellt ist, dessen Shore-A-Härte kleiner als 40 ist, und dessen Young-Modul kleiner als 1 MPa ist.

4. Vorrichtung (24) nach einem der vorhergehenden Ansprüche, bei der die Verkleidung (54; 56) eine evolutive Dicke parallel zur Achse (46; 48) der Walze aufweist, um den Kontakt der Verkleidungen (54; 56) der Walzen untereinander beiderseits des Profils (12) axial zu ermöglichen.

5. Vorrichtung (24) nach einem der vorhergehenden Ansprüche, bei der die Verkleidung (54; 56) aus einem expandierten Elastomer besteht, dessen Außenfläche, d.h. die Fläche, die dazu bestimmt ist, mit dem Profil (12) in Kontakt zu sein, nicht porös ist.

6. Vorrichtung (24) nach einem der vorhergehenden Ansprüche, umfassend einen Träger (38; 40), der die Walzen (42; 44) trägt, die eine Durchgangskammer (60) für das Profil bilden, wobei die Durchgangskammer (60) durch Dichtlippen (58) begrenzt ist, wobei jede Lippe (58) auf dem Träger (38; 40) in dichtem Kontakt mit einer entsprechenden Walze (42; 44) montiert ist.

7. Anlage (10) zur Vakuumbehandlung einer Oberfläche eines Profilgegenstandes (12) mit konkavem Querschnitt, **dadurch gekennzeichnet, dass** sie eine Hauptvakuumbehandlungskammer (18) umfasst, in der der Profilgegenstand (12) dazu bestimmt ist, behandelt zu werden, wobei die Hauptkammer (18) einen Eingang und einen Ausgang aufweist, jeweils umfassend eine Vorrichtung (24) nach einem der Ansprüche 1 bis 6.

8. Anlage (10) nach dem vorhergehenden Anspruch, umfassend Nebenweiterleitungskammern (20A; 20B; 20C; 20D), die jeweils einen anderen Druck als die Hauptkammer (18) aufweisen, wobei jede Nebenkammer (20A; 20B; 20C; 20D) einen Eingang und einen Ausgang aufweisen, jeweils umfassend eine Vorrichtung (24) nach einem der Ansprüche 1 bis 6.

9. Anlage (10) nach Anspruch 7 oder 8, bei der die Hauptkammer (18) Mittel (26; 28) zur Behandlung der Oberfläche des Profilgegenstandes (12) durch Ionenbeschuss umfasst.

10. Anlage (10) nach dem vorhergehenden Anspruch, bei der die Mittel (26; 28) zur Behandlung der Oberfläche in einer Hochvakuumkammer (30; 32) angeordnet sind, die in der Hauptkammer (18) angeordnet ist.

11. Anlage (10) nach Anspruch 9 oder 10, umfassend Mittel (26; 28) zum Ionenbeschuss, die dazu bestimmt sind, zwei entgegengesetzt liegende Oberflächen des Profilgegenstandes (12) zu beschießen.

12. Anlage (10) nach einem der Ansprüche 7 bis 11, bei der jede Kammer (18; 20A; 20B; 20C; 20D) mit Pumpmitteln (22) verbunden ist, die es ermöglichen, die Kammern unter den entsprechenden Vakuumbedingungen zu halten.

13. Anlage (10) nach einem der Ansprüche 7 bis 12, bei der der Profilgegenstand (12) aus einem Material auf Basis von Elastomer ist, das insbesondere dazu bestimmt ist, Wischerblätterpaare zu bilden.

14. Verfahren zur Vorbereitung von Wischerblättern (13), umfassend die Schritte, darin bestehend:
- durch Ionenbeschuss einen Profilgegenstand (12) in einer Anlage (10) nach einem der Ansprüche 7 bis 13 zu behandeln,
- den Profilgegenstand (12) in Abschnitte von entsprechender Länge zu schneiden, um Wischerblätterpaare zu bilden,
- die Wischerblätter (13) von einer zentralen Opferschicht (15) zu trennen, die Bestandteil jedes Wischerblätterpaars ist.

## Claims

1. Sealing device (24) intended to separate two spaces of different pressures through which is conveyed a profiled object (12), the device comprising a pair of rollers (42; 44) for conveying the profiled object (12) of axes (46; 48) that are substantially parallel to one another and orthogonal to the direction of conveying, the axes (46; 48) of the rollers being spaced apart so as to allow the profiled object (12) to be conveyed between them and to provoke the elastic deformation of the profiled object (12) by compression between the two rollers (42; 44), in order for the rollers (42; 44) and the deformed profiled object (12) to participate in the sealing between the two spaces,
**characterized in that** the profiled object (12) is of concave section and each roller (42; 44) comprises an elastically deformable peripheral coating (54; 56) intended to be in contact with the profiled object (12) so as to be jointly deformed with the profiled object (12).

2. Device (24) according to the preceding claim, in which each roller (42; 44) is made of a material with a Shore A hardness greater than 65 and with a Young's modulus greater than 3 MPa.

3. Device (24) according to Claim 1 or 2, in which the coating (54; 56) is made of a material with a Shore A hardness of less than 40 and a Young's modulus of less than 1 MPa.

4. Device (24) according to any one of the preceding claims, in which the coating (54; 56) has a thickness which is progressive parallel to the axis (46; 48) of the roller so as to allow for contact between the coatings (54; 56) of the rollers, on either side of the profiled object (12) axially.

5. Device (24) according to any one of the preceding claims, in which the coating (54; 56) consists of an expanded elastomer with an outer surface, that is to say the surface intended to be in contact with the profiled object (12), that is non-porous.

6. Device (24) according to any one of the preceding claims, comprising a support (38; 40) bearing the rollers (42; 44), forming a chamber (60) for passage of the profiled object, the passage chamber (60) being delimited by sealing lips (58), each lip (58) being mounted on the support (38; 40) in sealing contact with a corresponding roller (42; 44).

7. Installation (10) for the vacuum treatment of a surface of a profiled object (12) of concave section, **characterized in that** it comprises a main vacuum treatment chamber (18), in which the profiled object (12) is intended to be treated, the main chamber (18) comprising an inlet and an outlet each comprising a device (24) according to any one of Claims 1 to 6.

8. Installation (10) according to the preceding claim, comprising secondary transfer chambers (20A; 20B; 20C; 20D), each with a different pressure from that of the main chamber (18), each secondary chamber (20A; 20B; 20C; 20D) comprising an inlet and an outlet each comprising a device (24) according to any one of Claims 1 to 6.

9. Installation (10) according to Claim 7 or 8, in which the main chamber (18) comprises means (26; 28) for treating the surface of the profiled object (12) by ion bombardment.

10. Installation (10) according to the preceding claim, in which the surface treatment means (26; 28) are arranged in a high vacuum chamber (30; 32) housed in the main chamber (18).

11. Installation (10) according to Claim 9 or 10, comprising ion bombardment means (26; 28) intended to bombard two opposing surfaces of the profiled object (12).

12. Installation (10) according to any one of Claims 7 to 11, in which each chamber (18; 20A; 20B; 20C; 20D) is linked to pumping means (22) which make it possible to maintain said chambers in the appropriate vacuum conditions.

13. Installation (10) according to any one of Claims 7 to 12, in which the profiled object (12) is made of an elastomer-based material, notably intended to form twinned wiper blades.

14. Method for preparing wiper blades (13) comprising the steps consisting in:
- treating a profiled object (12) by ion bombardment in an installation (10) according to any one of Claims 7 to 13,
- cutting the profiled object (12) into sections of suitable length to form twinned wiper blades,
- separating the wiper blades (13) from a sacrificial central part (15) forming each pair of twinned wiper blades.
